(19) Europäisches Patentamt / European Patent Office / Office européen des brevets

(11) **EP 4 699 997 A1**

(12) **EUROPEAN PATENT APPLICATION**
published in accordance with Art. 153(4) EPC

(43) Date of publication:
**25.02.2026 Bulletin 2026/09**

(21) Application number: **24792609.0**

(22) Date of filing: **12.04.2024**

(51) International Patent Classification (IPC):
**C04B 18/167** (2023.01)   **C04B 14/06** (2006.01)
**C04B 14/28** (2006.01)   **C04B 18/08** (2006.01)
**C04B 18/14** (2006.01)   **C04B 28/02** (2006.01)

(52) Cooperative Patent Classification (CPC):
**C04B 14/06; C04B 14/28; C04B 18/08;
C04B 18/14; C04B 18/167; C04B 28/02**

(86) International application number:
**PCT/JP2024/014824**

(87) International publication number:
**WO 2024/219334 (24.10.2024 Gazette 2024/43)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **18.04.2023 JP 2023067795**

(71) Applicant: **TOKUYAMA CORPORATION
Yamaguchi 745-8648 (JP)**

(72) Inventors:
• **OTA, Masami**
  **Shunan-shi, Yamaguchi 745-8648 (JP)**
• **CHABAYASHI, Takashi**
  **Shunan-shi, Yamaguchi 745-0053 (JP)**

(74) Representative: **Kuhnen & Wacker
Patent- und Rechtsanwaltsbüro PartG mbB
Prinz-Ludwig-Straße 40A
85354 Freising (DE)**

(54) **MANUFACTURING METHOD OF PORTLAND CEMENT CLINKER**

(57)   A manufacturing method of cement clinker, baked at the relatively low temperature, containing MgO, having a good initial strength development property, and having reduced emission of $CO_2$, is provided. Waste concrete material is used as part of the raw materials, the raw materials are prepared such that the total content of $C_3A$ and $C_4AF$ is 22 mass% or higher, the $C_3S$ content is 60 mass% or higher, both calculated according to Bogue's formulae, the iron modulus (I.M.) is 1.3 or under, and the MgO content is s00101.1 - 1.5 mass%. The raw materials are baked at a temperature of 1300 - 1400 degree Celsius to Portland cement clinker.

FIG. 1
Mortar Compression Strength

■ Mortar Compression Strength (%) day 3      ▨ Mortar Compression Strength (%) day 7
□ Mortar Compression Strength (%) day 28

Processed by Luminess, 75001 PARIS (FR)

**Description**

Field of the Invention

The present invention relates to a manufacturing method of cement clinker. More specifically, the present invention relates to a manufacturing method of cement clinker: baking at a lower temperature than conventional cement clinker; effectively utilizing waste concrete materials as raw material for the cement clinker; and exhibiting excellent initial strength development.

Background Art

The cement industry is a mass production and mass consumption industry; due to emission of $CO_2$ and other environmental issues, resource conservation and energy efficiency are the most critical topic. For example, Portland cement, the most widely produced cement, is produced by baking raw materials adjusted to a specific chemical composition, at a high temperature of 1,450 degree Celsius to 1,550 degree Celsius, to produce the clinker. As a result, the baking process is the most energy-intensive process during the production. In other words, reducing the baking temperature of the clinker leads to energy saving. To reduce the baking temperature of the clinker, a technology which increases the $C_4AF$ ($4CaO \cdot Al_2O_3 \cdot Fe_2O_3$) content, one of the major minerals in the clinker, has been developed (Patent Document 1: JP2012-224504A). When the $C_4AF$ content is increased, the liquid phase is increased during the baking process, and the generation of clinker mineral, for example, the transition from $C_2S$ ($2CaO \cdot SiO_2$) to $C_3S$ ($3CaO \cdot SiO_2$), is promoted by the presence of the liquid phase. This reduces the baking temperature of the clinker.
Furthermore, for resource circulation, the effective utilization of wastes and by-products is an important issue. With utilizing the characteristics of the cement industry and cement manufacturing facilities, utilizing or processing wastes as raw materials for the clinker or as a heat energy source during cement manufacturing is effective for the safe and large-scale disposal of wastes and by-products. Many species of wastes and by-products contain a large quantity of $Al_2O_3$, and the above clinker which contains a large quantity of $C_4AF$ has a higher content of $Al_2O_3$ than conventional Portland cement clinkers. Therefore, the low temperature baking clinker consumes a large amount of wastes and by-products. In this regard, the clinker according to Patent Document 1 is superior.
The clinker containing a large amounts of $C_3A$ ($3CaO \cdot Al_2O_3$) and $C_4AF$ as clinker minerals consumes a large amount of wastes and is suitable for effective utilization of wastes.
On the other hand, utilizing wastes and by-products introduces their constituents into the cement clinker. In addition to $CaO$, $SiO_2$, $Al_2O_3$, and $Fe_2O_3$, which are the major constituents of cement clinker, other minor constituents affect to the baking property, actual mineral composition of the clinker, and to cement properties. For example, it has been reported that the clinker according to Patent Document 1 becomes to have a low initial strength development property till day 7 when its MgO content increases (Non-Patent Document 1).

Prior Art Documents

Patent Documents

Patent Document 1:       JP 2012-224504A

Non-Patent Document

Non-Patent Document 1: Masami Ota et al., Proceedings of the 74th Cement Technology Conference, Japan, p.p. 114-115 (2020)

Summary of the Invention

Problem to be Solved by the Invention

The clinker of Patent Document 1 is baked at the relatively low temperature and consumes a large amount of wastes containing $Al_2O_3$ and $Fe_2O_3$. However, since Non-Patent Document 1 reveals the increase in its MgO content results in low initial strength development property, the use of raw materials containing MgO may be restricted. Therefore, the object of the present invention is to provide a manufacturing method of clinker that contains MgO but exhibits good initial cement strength development property. Means for Solving the Problem

The present inventors diligently have considered for solving the problem and have found that when waste concrete materials are used as part of the raw materials of the above clinker, and when the MgO content is adjusted between 1.1 - 1.5 mass%, a better initial strength development property in comparison with a clinker having a conventional MgO content is obtained. Thus, the inventors have completed the invention. According to the manufacturing method of cement clinker of the present invention, waste concrete material is used as part of the raw materials, the raw materials are prepared such that the total content of $C_3A$ and $C_4AF$ is 22 mass% or more, the content of $C_3S$ is 60 mass% or more, both according to Bogue's formulae, iron modulus is 1.3 or under, and the MgO content is 1.1 - 1.5 mass%. The raw materials are baked at a temperature not lower than 1300 degree Celsius and not higher than 1400 degree Celsius. In this specification, when a range is indicated using " - " or the like, such as "1.1-1.5 mass%," it includes both the upper and lower limits.

Advantageous Effects of the Invention

According to the present invention, a clinker: baked at a lower temperature than conventional cement clinker; effectively utilizing waste concrete materials; and having good initial strength development property (at day 7 day or after) compared to those having conventional MgO contents is provided. Furthermore, according to the present invention, waste concrete material is used as a cement clinker raw material and reduces the consumption of limestone for the CaO source. Therefore, the generation of $CO_2$ from limestone during baking cement clinker is reduced.

Features for Carrying out the Invention

In this specification, waste concrete materials include, for example, ready-mixed concrete sludge, returned concrete, excess concrete, waste concrete, and so on. Waste concrete materials may include waste mortar. Waste concrete materials contain aggregates such as sand and gravel when generated, but it is preferable to remove the aggregates with crushing and sieving. This is because the aggregates contain $Na_2O$ and $K_2O$ of 3 mass% or more and 6 mass% or under in total, for example, and because the constituents in the waste concrete materials derived from old cement clinker replaces limestone as a new cement clinker raw material and reduces the $CO_2$ generation. Crushed waste concrete materials may be used without sieving.

The MgO concentration in ready-mixed concrete sludge is, for example, 2 mass% or more and 4 mass% or under, and that in aggregates is, for example, 1 mass% or more and 3 mass% or under. The MgO concentration of waste concrete materials takes an intermediate value between them. The MgO concentration of usual Portland cement clinker is, for example, 0.9 mass% or the like. The high MgO concentration in waste concrete materials is due to the constituents derived from blast furnace cement containing a large amount of MgO and aggregates which contain MgO. According to the inventors' experiences, when waste concrete is crushed and then sieved, the undersieve fraction with opening of 1.2 mm had a higher MgO concentration than the undersieve fraction with opening of 5 mm.

Regarding the Portland cement clinker (hereinafter referred to as "cement clinker") produced according to the present invention, the quantities of $C_3A$, $C_4AF$, and $C_3S$ are determined by Bogue's formulae.

The Bogue's formulae have been used, along with various indexes and moduli, based upon major chemical analysis values, to calculate approximately the major mineral composition and have been well know in the art. For reference, calculation of the mineral contents in cement clinkers by Bogue's formulae is described below.

$$C_3S \text{ content} = (4.07 \text{ X CaO}) - (7.60 \text{ X SiO}_2) - (6.72 \text{ Al}_2O_3) - (1.43 \text{ X Fe}_2O_3)$$

$$C_2S \text{ content} = (2.87 \text{ X SiO}_2) - (0.754 \text{ X C}_3S)$$

$$C_3A \text{ content} = (2.65 \text{ X Al}_2O_3) - (1.69 \text{ X Fe}_2O_3)$$

$$C_4AF \text{ content} = 3.04 \text{ X Fe}_2O_3.$$

Iron modulus (I.M.), hydraulic modulus (H.M.), siliceous modulus (S.M.), activity index (A.I.), and lime saturation degree (L.S.D.) have been well known coefficients in the art. They are determined based upon major chemical constituents and have been used for the cement production control along with other coefficients. For the sake of clarity, the calculation methods for iron modulus and other coefficients are described below.

$$\text{Hydraulic modulus (H.M.)} \quad = CaO/(SiO_2 + Al_2O_3 + Fe_2O_3)$$

$$\text{Siliceous modulus (S.M.)} \quad = SiO_2/(Al_2O_3 + Fe_2O_3)$$

$$\text{Iron modulus (I.M.)} \quad = Al_2O_3/Fe_2O_3$$

$$\text{Activity index (A.I.)} \quad = SiO_2/Al_2O_3$$

$$\text{Lime saturation degree (L.S.D.)} \quad = CaO/(2.8 \times SiO_2 + 1.2 \times Al_2O_3 + 0.65 \times Fe_2O_3).$$

The above $CaO$, $SiO_2$, $Al_2O_3$, and $Fe_2O_3$ are measurable according to JIS R 5202 "Chemical Analysis of Portland cement," JIS R 5204 "X-ray fluorescence analysis of cement," and so on.

As described above, according the present invention, the total content of $C_3A$ and $C_4AF$ is 22 mass% or more. When the total content is under 22 mass%, the production of cement clinker having good strength development property at the relatively low baking temperature becomes difficult. The total content is preferably 24 mass% or more. As will be described, for the high strength development property, the content of $C_3S$ is at least 60 mass%. Therefore, the total content of $C_3A$ and $C_4AF$ is at most 40 mass%. The total content is preferably 35 mass% or under, more preferably, 32 mass% or under, and most preferably, 28 mass% or under. Since $C_4AF$ contributes the baking at the relatively low temperature and reduces the free CaO content in the cement clinker, $C_4AF$ is preferably present 15 mass% or more.

The $C_3S$ content is very important regarding the strength development property of the cement compositions (hereinafter, referred to as "cement") using the cement clinker according to the invention. If it is under 60 mass%, good strength development property is not obtainable, even if the total content of $C_3A$ and $C_4AF$ and the iron modulus described later are within the prescribed ranges. The $C_3S$ content is preferably 62 mass% or more and more preferably 63 mass% or more. Since the total content of $C_3A$ and $C_4AF$ is at least 22 %, the upper limit of $C_3S$ content is 78 %. For obtaining a suitable period from the start of hardening to the end of hardening, the $C_3S$ content is preferably 70 mass% or under and more preferably 65 mass% or under.

According to the present invention, the cement clinker may further contains $C_2S$. The content is preferably 18 mass% or under and 3mass% or more. For obtaining long term strength, it is particularly preferable that the total content of $C_2S$ and $C_3S$ is 69 mass% or more.

According to the present invention, the iron modulus (I.M.) of the cement clinker is 1.3 or less. When the iron modulus exceeds 1.3, sufficient strength development (more specifically, for example, mortar strength development) is not obtainable even when other requirements for the cement clinker are met. Furthermore, when the iron modulus exceeds 1.3, the period from the start of hardening to the end of hardening becomes too long, and therefore, the iron modulus is 1.3 or less. The preferable range of iron modulus is 1.0 to 1.3, and more preferably 1.14 to 1.27.

The hydraulic modulus and the siliceous modulus are not particularly limited, however, the hydraulic modulus is preferably 1.8 - 2.2, and more preferably 1.9 - 2.1 for achieving a good balance of various properties. The siliceous modulus is preferably 1.0 - 2.0 and more preferably 1.1 - 1.7 according to the similar reasons.

The most important feature according to the present invention is the use of waste concrete materials as part of raw materials and that the MgO content is 1.1 to 1.5 mass%. Examples of waste concrete materials include ready-mixed concrete sludge, returned concrete, excess concrete, waste concrete, and waste mortar. They may be used alone or in combination. The ready-mixed concrete sludge is obtained with washing concrete mixer trucks, recovering ready-mixed concrete, separating it into aggregates and sludge comprising cement, and separating solid components from the sludge. Returned concrete refers to ready-mixed concrete returned without being used in a construction site. Excess concrete includes returned concrete and refers to those not used due to various reasons such as failing inspections, excessive production, and so on. Waste concrete refers to discarded concrete material resultant from demolition of buildings and so on.

Waste concrete materials have higher MgO contents than conventional cement raw materials (CAO source such as limestone, $SiO_2$ source such as silica stone, $Al_2O_3$ source such as clay, and $Fe_2O_3$ source such as iron source). Presumably, this is because waste concrete materials include components derived from blast furnace cement and because the aggregates of concrete have a high content of MgO. The MgO content in cement clinker is measurable according to JIS R 5202 "Chemical Analysis of Portland cement" and JIS R 5204 "X-ray fluorescence analysis of cement."

Furthermore, limestone (calcium carbonate), which has been a CaO raw material in cement clinker production, emits carbon dioxide during baking. In contrast, the waste concrete materials used according to the invention contain calcium oxide and they serve as CaO raw materials. Therefore, the waste concrete materials reduce the limestone, which is a carbon dioxide source, and reduces the emission of carbon dioxide during cement clinker production.

When cement clinker with the above composition is prepared with conventional raw materials not containing waste concrete materials, the resultant cement clinker contains MgO at most 0.90 mass% or the like. When waste concrete materials are used as part of the raw materials such that the MgO content is 1.1 - 1.5 mass% in the produced clinker, superior initial strength development property is achieved than those usual MgO content, while the mechanism is not clear. Further, when the MgO content is adjusted with other materials in place of the waste concrete materials, for example, with reagent chemicals, the good initial strength development property is not achieved. With the effective use of waste concrete materials, the MgO content in the clinker increases. The preferable MgO content is 1.2 to 1.5 mass%, and more preferably, 1.35 to 1.50 mass%.

The cement clinker according to the present invention, with usage of waste concrete materials as part of the raw materials, has a large MgO content. This cement clinker exhibits good initial strength development property compared to cement clinker with usual MgO contents.

Preferably, waste concrete materials are added to the raw materials such that the MgO content derived from the waste concrete material is 0.25 mass% or more and 1.0 mass% or less in the Portland cement clinker after baking.

Preferably, the waste concrete material content in the raw materials of the cement clinker is 10 mass% or more and 30 mass% or less.

According to the present invention, Portland cement clinker is baked at a lower temperature compared to conventional Portland cement clinkers. Namely, conventional ordinary Portland cement clinkers have been baked at a temperature of around 1,450 degree Celsius, but according to the present invention, the cement clinker is baked at a temperature of 1300 - 1,400 degree Celsius.

The manufacturing method of Portland cement clinker according to the present invention is not particularly limited, except for the usage of waste concrete material as part of the raw materials and adjusting the raw materials to the specific mineral composition and the specific coefficients. When known cement (clinker) raw materials and waste concrete material are mixed in predetermined proportion to the specific mineral composition and the specific coefficients, and then baked in an SP kiln or NSP kiln, the Portland cement clinker according to the present invention is obtained.

The preparation and mixing of the cement raw materials may be appropriately selected from known methods. For example, the compositions of waste materials, by-products, and other raw materials (CaO sources such as limestone, quicklime, and slaked lime, $SiO_2$ sources such as silica stone, $Al_2O_3$ sources such as clay, $Fe_2O_3$ sources such as iron sources, and so on) are measured in advance, and the mixing ratio thereof is calculated such that the raw material composition is within the specific range based upon the compositions of the raw materials. The raw materials are mixed according to the mixing ratio.

The raw materials used in the manufacture of the cement clinker according to the present invention include those used in the production of conventional cement clinkers without particular restrictions. Wastes and by-products are, of course, usable.

In the manufacture of cement clinker according to the present invention, the use of one or more of waste, by-products, and so on is preferable for promoting the effective utilization of wastes, by-products, and so on. Specific examples of usable wastes and by-products include blast furnace slag, steel slag, non-ferrous slag, coal ash, sewage sludge, water treatment sludge, paper mill sludge, construction waste soil, foundry sand, fly ash, incineration fly ash, molten fly ash, chlorine bypass dust, wood chips, waste white clay, bota, waste tires, shells, municipal waste, and their incineration ash. (Some of them serve as cement raw materials and as thermal energy sources.)

Coal ash contains MgO of 1 mass% to 2 mass%, for example. However, coal ash includes $Al_2O_3$ at a high concentration and affects the composition of the cement clinker, if added by a large amount. Further, the addition of coal ash does not reduce the $CO_2$ emission. Therefore, according to the invention, the MgO content in the cement clinker is adjusted with the waste concrete materials.

In particular, the cement clinker according to the invention contains a large quantities of $C_3A$ and $C_4AF$ which include $Al_2O_3$ as constituent. As a result, compared to conventional cement clinker, the cement clinker according to the invention consumes large amounts of wastes and by-products containing a large quantity of $Al_2O_3$.

To adjust the MgO content in the cement clinker, the above wastes, by-products, natural raw materials, and waste concrete materials are analyzed, and the mixing ratio of the raw materials is determined to achieve the specific MgO content. The Mg components in the raw materials are oxides, composite oxides, and, in some cases, magnesium alloys or metallic magnesium and they are not volatile at the baking temperature of clinker. Therefore, all Mg components in the raw materials are presumed to be transferred to the clinker, and the mixing ratios are calculated accordingly. If some Mg components are volatile during the pulverization and the baking processes and, therefore, is not transferred to the clinker, these amounts are taken into account in the calculations.

The cement clinker according to the present invention is pulverized together with gypsum or pulverized separately and then mixed with gypsum to make cement, in the same manner as conventional cement clinkers. Examples of such cement include ordinary Portland cement, early strength Portland cement, and ultra-early strength Portland cement. In addition, it is usable as a component of various mixed cements or as a component of solidifying agents such as soil solidifier.

When gypsum is added to make a cement composition, the species of gypsum is not particularly restricted. Gypsums commonly used as a raw material for cement, such as dihydrate gypsum, hemihydrate gypsum, and anhydrous gypsum, and so on are usable. The amount of gypsum is, in the case of Portland cement, preferably 1.8 - 3 mass% in conversion into the amount of $SO_3$ in the Portland cement. The pulverizing method for cement clinker and gypsum is selected from known pulverization methods.

The cement composition may be pulverized with admixtures and a pulverization agent such as blast furnace slag, siliceous admixture, fly ash, calcium carbonate, and limestone, or pulverized separately and mixed with the admixture. Chlorine bypass dust or similar materials may also be mixed.

The fineness of the cement composition is not particularly limited, but it is preferably 2800 to 4500 cm$^2$/g, in conversion to a Blaine specific surface area.

Furthermore, as needed, blast furnace slag, fly ash, or the like may be mixed after pulverizing to produce blast furnace cement, fly ash cement, or the like.

Brief Description of the Drawing

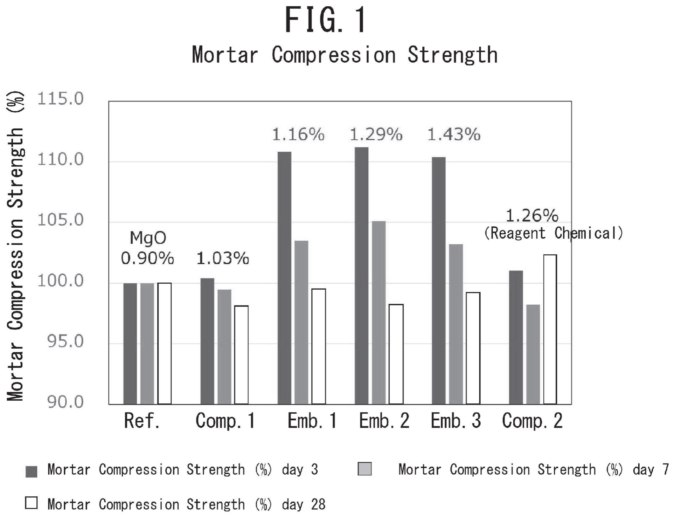

Figure 1: A characteristic diagram indicating the relationship between MgO concentrations in cement clinkers and mortar compressive strengths, in the embodiments.

Embodiments

The following embodiments will illustrate examples and advantageous effects of the present invention, but the invention is not limited to these embodiments.

Reference Example, Comparative Example 1, and Embodiments 1 to 3

Industrial raw materials including wastes (limestone, silica sand, coal ash, and karami (mineral slag containing iron), and ready-mixed concrete sludge, which is one of waste concrete materials, were used to prepare the raw materials. The raw materials were baked at 1,360 degree Celsius for 100 minutes to obtain cement clinker. The ready-mixed concrete sludge was one immediately after being dried to a completely dry state, after separating aggregate from returned concrete at a ready-mix concrete plant and then dewatering it by a filter press. Table 1 shows the chemical composition of the ready-mixed concrete sludge after being heated at 1000 degree Celsius. Table 2 shows the mixing ratios of ready-mixed concrete sludge in the raw materials (in mass% unit) and the chemical composition of the clinker obtained after being baked (in mass% unit). Table 3 shows the mineral composition (in mass% unit) according to the Bogue's formulae, the moduli, and the indexes. Since mineral compositions are calculated according to Bogue's formulae without consideration to impurities, the total is slightly less than 100 mass%.

To 100 mass parts of cement clinker, 2.2 mass parts of dihydrate gypsum and 1.8 mass parts of hemihydrate gypsum were mixed, and they were pulverized to a Blaine specific surface area of 3200 $\pm$ 100 cm$^2$/g to respective cements. The mortar compressive strengths of the cements are shown in Table 4 and Fig. 1. Cement produced from the cement clinker without ready-mixed concrete sludge and without adjusting the MgO content is the reference example. The mortar compressive strength of the reference example was set to 100% and it was used as the standard to indicate the mortar strength of other cements. The measurement method will be described later.

As shown in Table 4 and Fig. 1, when the MgO concentration in cement clinker was maintained between 1.1 mass% and 1.5 mass%, the initial mortar compressive strengths at day 3 and day 7 increased. Furthermore, there was a significant difference in initial mortar compressive strengths between MgO concentrations of 1.03 mass% and 1.16 mass%. Furthermore, addition of reagent chemical MgO did not improve the initial strength.

(1) Measurement of MgO and other chemical compositions of raw materials and cement clinker: JIS R 5204 "X-ray fluorescence analysis of cement."
(2) Measurement of mortar compressive strength: JIS R 5201.

[Table 1]

| | Chemical Composition (%) | | | | | | | |
|---|---|---|---|---|---|---|---|---|
| | $SiO_2$ | $Al_2O_3$ | $Fe_2O_3$ | CaO | MgO | $SO_3$ | $Na_2O$ | $K_2O$ |
| Sludge | 29.31 | 8.64 | 4.81 | 50.24 | 2.78 | 1.57 | 0.74 | 0.88 |

Comparative Example 2

The adjustment of MgO content was performed, instead of the ready-mixed concrete sludge, one of waste concrete materials, by special grade reagent chemical (MgO), and the similar tests as those in Comparative Example 1 and Embodiments 1 to 3 were conducted. Table 2 shows the chemical compositions of the clinkers after baking, Table 3 shows the mineral compositions according to the Bogue's formulae and the moduli, and Table 4 shows the mortar compressive strengths of the cements in % unit.

[Table 2]

| | Sludge Composition Rate (%) | Chemical Composition (%) | | | | | | | | | | | | |
|---|---|---|---|---|---|---|---|---|---|---|---|---|---|---|
| | | MgO | $SiO_2$ | $Al_2O_3$ | $Fe_2O_3$ | CaO | $SO_3$ | $Na_2O$ | $K_2O$ | $TiO_2$ | $P_2O_5$ | MnO | SrO | Cl |
| Ref. | 0 | 0.90 | 19.54 | 7.12 | 5.56 | 65.49 | 0.18 | 0.16 | 0.30 | 0.34 | 0.12 | 0.04 | 0.04 | 0 |
| Comp.1 | 6.0 | 1.03 | 19.50 | 7.09 | 5.57 | 65.22 | 0.25 | 0.21 | 0.36 | 0.36 | 0.13 | 0.04 | 0.04 | 0 |
| Emb.1 | 12.0 | 1.16 | 19.36 | 7.10 | 5.64 | 65.00 | 0.35 | 0.24 | 0.38 | 0.35 | 0.14 | 0.04 | 0.04 | 0 |
| Emb.2 | 18.0 | 1.29 | 19.31 | 7.03 | 5.59 | 64.84 | 0.47 | 0.28 | 0.42 | 0.34 | 0.15 | 0.04 | 0.04 | 0 |
| Emb.3 | 25.0 | 1.43 | 19.34 | 6.92 | 5.40 | 64.80 | 0.56 | 0.32 | 0.44 | 0.35 | 0.15 | 0.05 | 0.04 | 0 |
| Comp.2 | 0 | 1.26 | 19.47 | 6.97 | 5.64 | 65.27 | 0.18 | 0.16 | 0.31 | 0.34 | 0.12 | 0.04 | 0.04 | 0 |

[Table 3]

| | Mineral Composition by Bogue's Formulae | | | | Moduli | | |
|---|---|---|---|---|---|---|---|
| | $C_3S$ | $C_2S$ | $C_3A$ | $C_4AF$ | H.M. | S.M. | I.M |
| Ref. | 62.2 | 9.2 | 9.5 | 16.9 | 2.03 | 1.54 | 1.28 |
| Comp.1 | 61.6 | 9.5 | 9.4 | 16.9 | 2.03 | 1.54 | 1.27 |
| Emb.1 | 61.6 | 9.1 | 9.3 | 17.1 | 2.02 | 1.52 | 1.26 |
| Emb.2 | 61.9 | 8.7 | 9.2 | 17.0 | 2.03 | 1.53 | 1.26 |
| Emb.3 | 62.5 | 8.4 | 9.2 | 16.4 | 2.05 | 1.57 | 1.28 |
| Comp.2 | 62.8 | 8.5 | 8.9 | 17.1 | 2.03 | 1.54 | 1.24 |

[Table 4]

| | Mortar Compression Strength (%) | | |
|---|---|---|---|
| | Day 3 | Day 7 | Day 28 |
| Ref. | 100.0 | 100.0 | 100.0 |
| Comp.1 | 100.4 | 99.5 | 98.1 |
| Emb.1 | 110.8 | 103.5 | 99.5 |
| Emb.2 | 111.2 | 105.1 | 98.2 |
| Emb.3 | 110.4 | 103.2 | 99.2 |
| Comp.2 | 101.0 | 98.2 | 102.3 |

In the reference example, no ready-mixed concrete sludge, which is waste concrete material, was used, and the MgO content was not adjusted to obtain the cement clinker. The MgO content was 0.90 mass%, which is at the conventional level. The results of embodiments and comparative examples were evaluated based on the comparison with the reference example.

Comparative Example 1 had a MgO content of less than 1.1 mass%, and the mortar compressive strength up to 7 days after setting was equivalent to that of the reference example.

Embodiments 1-3 were prepared according to the invention, the MgO content was higher than that of the conventional clinker, and the initial mortar compressive strength up to 7 days after setting exceeded that of the reference example. Additionally, the MgO content did not affect the mortar compressive strength at day 28.

Comparative Example 2 was prepared without waste concrete materials and with the addition of special grade reagent chemical MgO to make the MgO content within the range of 1.1 to 1.5 mass%. The mortar compressive strength at day 3 was comparable to the reference example, but the mortar compressive strength at day 7 was lower than that of the reference example. Therefore, it was found that when the MgO content was adjusted with the addition of special grade reagent chemical, within the range according to the invention, the advantageous effect of the present invention is not obtainable.

**Claims**

1. A manufacturing method of Portland cement clinker: baking raw materials having a total content of $C_3A$ and $C_4AF$ of 22 mass% or more, a content of $C_3S$ of 60 mass% or more, both according to Bogue's formulae, and iron modulus of 1.3 or under, at a temperature not lower than 1300 degree Celsius and not higher than 1400 degree Celsius, being **characterized in that**
   waste concrete material is added into the raw materials such that the Portland cement clinker after baking has a MgO content not less than 1.1 mass% and not higher than 1.5 mass.

2. The manufacturing method of Portland cement clinker according to claim 1, being **characterized in that** said waste concrete material is at least one member selected from a group of ready-mixed concrete sludge, returned concrete, excess concrete, waste concrete, and waste mortar.

3. The manufacturing method of Portland cement clinker according to claim 1 or 2, being **characterized in that** the $C_4AF$ content in the Portland cement clinker is 15 mass% or higher.

4. The manufacturing method of Portland cement clinker according to claim 1, being **characterized in that** the total content of $C_3S$ and $C_2S$ is 69 mass% or higher.

5. The manufacturing method of Portland cement clinker according to claim 1 being **characterized in that** gypsum is added into Portland cement clinker after baking.

6. The manufacturing method of Portland cement clinker according to claim 5, being **characterized in that** admixture selected from a group consisting of at least one of blast furnace slag, siliceous admixture, fly ash, and limestone is added into Portland cement clinker after baking.

7. The manufacturing method of Portland cement clinker according to claim 1 or 2, being **characterized in that** the waste concrete material is added such that the MgO content derived from the waste concrete material is 0.25 mass% or higher and 1.0 mass% or lower in Portland cement clinker after baking.

8. The manufacturing method of Portland cement clinker according to claim 7, being **characterized in that** the waste concrete material is added such that the waste concrete material has a concentration not less than 10 mass% and not higher than 30 mass% in the raw material.

# FIG.1

## Mortar Compression Strength

## INTERNATIONAL SEARCH REPORT

| | International application No. |
|---|---|
| | **PCT/JP2024/014824** |

| A. | CLASSIFICATION OF SUBJECT MATTER |
|---|---|

*C04B 18/167*(2023.01)i; *C04B 14/06*(2006.01)i; *C04B 14/28*(2006.01)i; *C04B 18/08*(2006.01)i; *C04B 18/14*(2006.01)i; *C04B 28/02*(2006.01)i
FI:    C04B18/167; C04B18/14 A; C04B14/06 Z; C04B18/08 Z; C04B14/28; C04B28/02

According to International Patent Classification (IPC) or to both national classification and IPC

| B. | FIELDS SEARCHED |
|---|---|

Minimum documentation searched (classification system followed by classification symbols)

C04B18/167; C04B14/06; C04B14/28; C04B18/08; C04B18/14; C04B28/02

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2012-240856 A (TOKUYAMA CORPORATION) 10 December 2012 (2012-12-10) paragraph [0030], table 1, example 2 | 1-8 |
| A | JP 2017-088434 A (TOKUYAMA CORPORATION) 25 May 2017 (2017-05-25) claims, paragraph [0021] | 1-8 |
| A | JP 2021-143108 A (TOKUYAMA CORPORATION) 24 September 2021 (2021-09-24) paragraph [0041], table 1, example 1 | 1-8 |
| A | JP 2021-155288 A (SUMITOMO OSAKA CEMENT CO., LTD.) 07 October 2021 (2021-10-07) paragraphs [0003], [0011], [0045]-[0046], table 1, example 1 | 1-8 |

☑ Further documents are listed in the continuation of Box C.          ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **12 June 2024** | **25 June 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT

| International application No. |
| --- |
| **PCT/JP2024/014824** |

### C. DOCUMENTS CONSIDERED TO BE RELEVANT

| Category* | Citation of document, with indication, where appropriate, of the relevant passages | Relevant to claim No. |
| --- | --- | --- |
| A | 茶林敬司, 中村明則, 加藤弘義, 佐田香織, TiO2およびMgOがクリンカー鉱物組成およびセメントの物性に及ぼす影響, セメント・コンクリート論文集, 25 February 2013, vol. 66, no. 1, pp. 211-216, https://doi.org/10.14250/cement.66.211, (CHABAYASHI, Takashi. NAKAMURA, Akinori. KATO, Hiroyoshi. SADA, Kaori. INFLUENCE OF TITANIUM OXIDE AND MAGNESIUM OXIDE ON THE MINERAL COMPOSITION AND THE PROPERTIES OF CEMENT. Cement Science and Concrete Technology.) p. 213, left column, line 11 to p. 214, left column, line 16, table 1 | 1-8 |
| A | JP 2003-201156 A (MIE PREFECTURE) 15 July 2003 (2003-07-15) entire text, all drawings | 1-8 |
| A | JP 6-285454 A (ONODA CEMENT CO., LTD.) 11 October 1994 (1994-10-11) entire text, all drawings | 1-8 |
| A | JP 10-152356 A (NAKAMURA, Shizuo) 09 June 1998 (1998-06-09) entire text, all drawings | 1-8 |

Form PCT/ISA/210 (second sheet) (July 2022)

## INTERNATIONAL SEARCH REPORT
### Information on patent family members

International application No.

**PCT/JP2024/014824**

| Patent document cited in search report | | | Publication date (day/month/year) | Patent family member(s) | Publication date (day/month/year) |
|---|---|---|---|---|---|
| JP | 2012-240856 | A | 10 December 2012 | (Family: none) | |
| JP | 2017-088434 | A | 25 May 2017 | (Family: none) | |
| JP | 2021-143108 | A | 24 September 2021 | (Family: none) | |
| JP | 2021-155288 | A | 07 October 2021 | CN 114007995 A<br>paragraphs [0002], [0035], [0145]-[0147], table 1, example 1<br>KR 10-2021-0132201 A | |
| JP | 2003-201156 | A | 15 July 2003 | (Family: none) | |
| JP | 6-285454 | A | 11 October 1994 | (Family: none) | |
| JP | 10-152356 | A | 09 June 1998 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012224504 A

**Non-patent literature cited in the description**

- **MASAMI OTA et al.** *Proceedings of the 74th Cement Technology Conference*, 2020, 114-115